# EUROPEAN PATENT SPECIFICATION

(11) **EP 4 318 767 B1**
(45) Date of publication and mention of the grant of the patent: **06.05.2026**
(21) Application number: 22861583.7
(22) Date of filing: 04.08.2022
(51) Int. Cl.: H01M 50/317, H01M 50/204, H01M 50/291

(54) **BATTERY MODULE AND BATTERY PACK INCLUDING THE SAME**
BATTERIEMODUL UND BATTERIEPAKET MIT DIESEM
MODULE DE BATTERIE ET BLOC DE BATTERIES COMPRENANT CELUI-CI

(30) Priority: 25.08.2021 KR 20210112602
(43) Date of publication of application: 07.02.2024
(73) Proprietor: LG Energy Solution, Ltd., Seoul 07335 (KR)
(72) Inventor: JANG, Sunghwan, Daejeon 34122 (KR); SEONG, Junyeob, Daejeon 34122 (KR); PARK, Myungki, Daejeon 34122 (KR); PARK, Won Kyoung, Daejeon 34122 (KR)
(74) Representative: Goddar, Heinz J.
(86) International application number: PCT/KR2022/011514
(87) International publication number: WO 2023/027372

(56) References cited:
- WO-A1-2012/133710
- WO-A1-2020/134051
- WO-A1-2021/052037
- CN-A- 111 668 406
- CN-A- 111 668 408
- CN-A- 111 668 409
- CN-A- 112 331 992
- CN-U- 210 110 904
- CN-U- 212 725 427
- CN-U- 213 752 874
- KR-A- 20210 055 364
- US-A1- 2021 194 072

## Description

### [Technical Field]

This application claims priority to and the benefit of Korean Patent Application No. 10-2021-0112602 filed in the Korean Intellectual Property Office on August 25, 2021.

The present invention relates to a battery module and a battery pack including the same, and particularly relates to a battery module for improving safety and venting performance and a battery pack including the same.

### [Background Art]

As technical developments and demands on mobile devices increase, demands on rechargeable batteries as energy sources are steeply increasing. Accordingly, studies on the rechargeable batteries for satisfying various demands are in active progress.

The rechargeable batteries are gaining much attention as energy sources for power-based devices such as electric bicycles, electric vehicles, and hybrid electric vehicles in addition to mobile devices such as mobile phones, digital cameras, and laptops.

Recently, as needs for a large-capacity secondary battery structure increase in addition to the use as an energy storing source of the secondary battery, needs for the battery packs in a medium to large module structure in which battery modules in which secondary batteries are coupled in series or in parallel are gathered are increasing. The battery pack consists mainly of a battery module composed of at least one battery cell, and is composed by adding other constituent elements by using at least one battery module. Since the battery cells constituting the battery module are composed of a chargeable and dischargeable rechargeable battery, such a high power/large capacity rechargeable battery generates a large amount of heat during charge and discharge processes. Particularly, one or a couple of battery cells per device are used for small mobile devices, whereas medium and large devices such as automobiles require high power/large capacity. Therefore, a medium or large-sized battery module with a plurality of battery cells electrically connected to each other is used.

Since it is preferable for medium and large battery modules to be manufactured with as small a size and weight as possible, a prismatic battery and a pouch-type battery, which may have a high integration degree and have a small weight with respect to capacity, are mainly used as a battery cell of the medium and large battery modules.

When some of the battery modules receive an overvoltage or an overcurrent or they are overheated while in the above-noted integrated state, safety and operation efficiency of the battery pack may be problematic. Specifically, the capacity of the battery pack is in the increasing trend to improve mileage, and hence, there is a need to design a structure satisfying reinforcing safety standards and obtaining safety of vehicles and drivers.

CN 111 668408 A, CN 111 668 409 A, and CN 111 668 406 A relate to a battery tray, a power battery pack and a vehicle.

WO 2021 / 052 037 A1 relates to energy storage devices, and in particular to a lower box, a battery pack and a vehicle.

US 2021/0194072 A1 relate to a thermal runaway detection system and a battery system including the same.

WO 2012 133710 A1 relates to a power supply device for supplying power to a motor for driving a vehicle such as a hybrid vehicle or an electric vehicle and a vehicle provided with the same.

CN 213 752 874 U relates to a battery box and a battery pack.

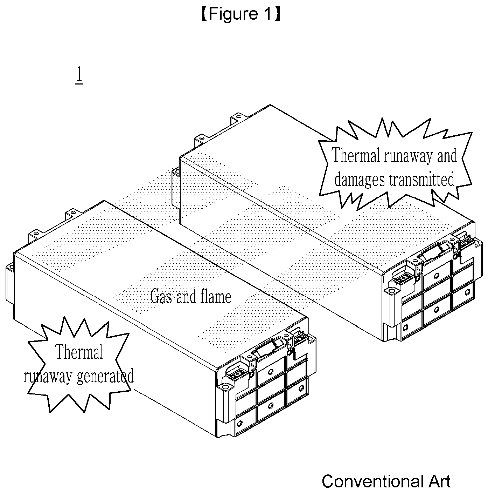

FIG. 1 shows a perspective view of a conventional battery module.

As shown in FIG. 1, regarding the battery module 1, when a battery pack is configured, a plurality of battery modules 1 are disposed near the same. In this instance, when thermal runaway is generated in one battery module 1 and is not quickly discharged to an outside, high-temperature gas and flame therein are exploded at once and are transmitted to an adjacent battery module 1. By this, thermal runaway is successively generated to the battery module 1 and damage of the battery module 1 is also transmitted.

Therefore, it is required to prevent propagation to adjacent modules and minimize damage when the thermal runaway is generated, and for this purpose, needs of a configuration for minimizing the damage by efficiently discharging the gas and flame generated in part of the battery module without an additional transition.

### [Disclosure]

The present invention has been made in an effort to provide a battery module for quickly discharging flame and gas to an outside to prevent transition of a thermal runaway phenomenon between a battery cell and battery modules when an ignition phenomenon is generated in the battery module, and a battery pack including the same.

The technical problem to be solved of the present invention is not limited to the above-described problem, and problems not mentioned will be clearly understood by a person of ordinary skill in the art from the present specification and the accompanying drawings.

An embodiment of the present invention provides a battery module including: a plurality of battery cell stacking bodies, each battery cell stacking body including battery cells; a frame member for receiving the plurality of battery cell stacking bodies; and at least one cell barrier structure body disposed between adjacent battery cell stacking bodies of the plurality of battery cell stacking bodies, wherein the at least one cell barrier structure body includes two planar members, and a venting passage formed by the two planar members, and each of the planar members includes an inflow portion that is opened and closed.

The inflow portion includes: a first opening formed by an opening in a respective planar member; a blocking plate for covering the first opening; and a plurality of support portions attached to the blocking plate, wherein the first end of the column portion is fixed to the insides of the planar members.

Each of the plurality of support portions includes:
a column portion having a first end attached to the blocking plate; a raised portion at a second end of the column portion; and an elastic portion around the column portion and variably supporting a gap between the raised portion and the blocking plate.

The elastic portion is a spring.

The blocking plate is configured to move toward the raised portion by a pressure of a gas input through the first opening to open the inflow portion.

The at least one cell barrier structure body may include a first end and a second end spaced from the first end in a length direction, and the first opening may be formed near the first end, while the second end may be connected to a first outlet communicating with an outside of the battery module.

The battery module may further include a first end plate and a second end plate for covering respective end portions of the plurality of battery cell stacking bodies in the length direction, wherein the first end plate may include the first outlet.

The battery module may further include at least one external venting passage disposed at a side of one of the plurality of battery cell stacking bodies opposite the at least one cell barrier structure body.

The at least one external venting passage may include a first end and a second end spaced from the first end in the length directon, and may include a second opening disposed near the first end and opened toward the plurality of battery cell stacking bodies.

The second end of the external venting passage may be connected to a second outlet communicating with the outside of the battery module.

The second end plate may not include an outlet, and the first opening of the venting passage may be connected to the external venting passage by a space between an end portion of the plurality of battery cell stacking bodies and the second end plate.

Another embodiment of the present invention provides a battery pack including a battery module.

According to the embodiment, the battery module and the battery pack including the same may prevent transition of the thermal runaway to the adjacent battery module by blocking transition to another adjacent battery cell stacking body in the battery module when the ignition phenomenon is generated in part of the battery cell stacking body in the battery module, and quickly discharging the gas and flame to the outside of the battery module.

The effects of the object of the present invention are not limited to the above-described effects, and effects not mentioned will be clearly understood by a person of ordinary skill in the art from the present specification and the accompanying drawings.

### [Description of the Drawings]

FIG. 1 shows a perspective view of a conventional battery module.
FIG. 2 shows a perspective view of a battery module according to an embodiment of the present invention.
FIG. 3 shows an exploded perspective view of a battery module of FIG. 2.
FIG. 4 shows a cross-sectional view with respect to a line IV-IV' of FIG. 2.
FIG. 5 shows an enlarged portion in which an inflow portion is formed in FIG. 2.
FIG. 6 shows an enlarged portion VI of FIG. 4.
FIG. 7A and FIG. 7B show discharging of gas when thermal runaway is generated in a battery module of FIG. 2.

### [Mode for Invention]

The present invention will be described more fully hereinafter with reference to the accompanying drawings, in which embodiments of the invention are shown.

In order to clearly describe the present invention, parts that are irrelevant to the description are omitted, and identical or similar constituent elements throughout the specification are denoted by the same reference numerals.

The size and thickness of each element are arbitrarily illustrated for ease of description, and the present disclosure is not necessarily limited to those illustrated in the drawings. In the drawings, the thickness of layers, films, panels, regions, etc., are enlarged for clarity. The thicknesses of some layers and regions are exaggerated.

Unless explicitly described to the contrary, the word "comprise", and variations such as "comprises" or "comprising", will be understood to imply the inclusion of stated elements but not the exclusion of any other elements.

The phrase "in a plan view" or "on a plane" means viewing a target portion from the top, and the phrase "in a cross-sectional view" or "on a cross-section" means viewing a cross-section formed by vertically cutting a target portion from the side.

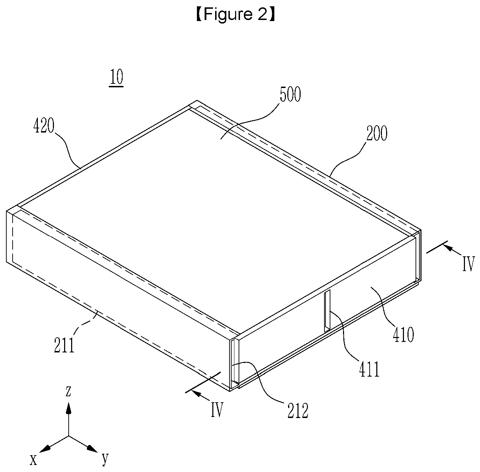

A battery module according to an embodiment of the present invention will now be described with reference to FIG. 2 to FIG. 6.

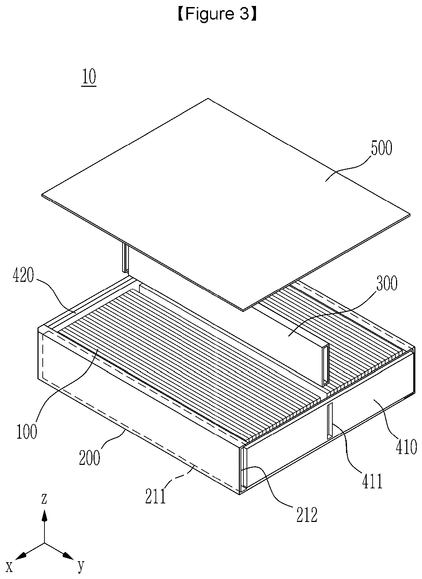

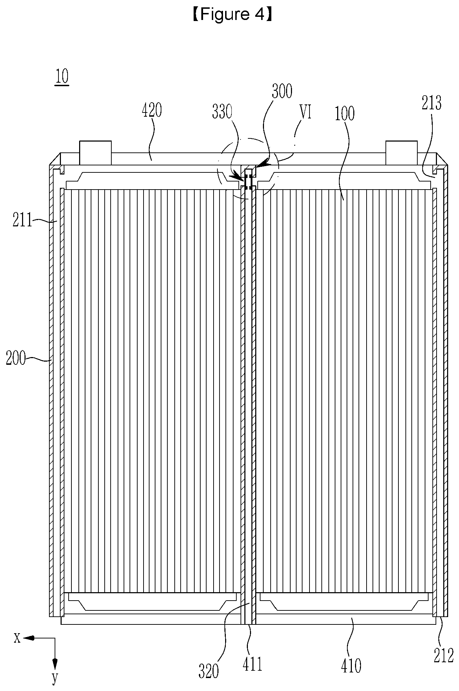

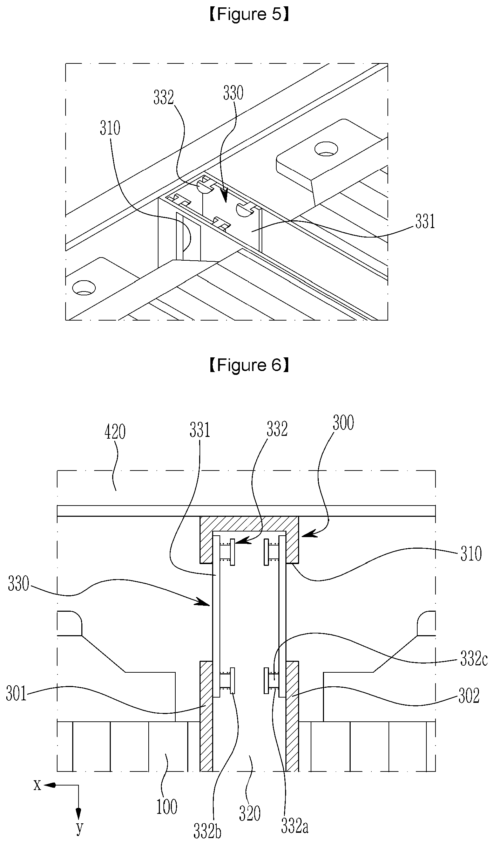

FIG. 2 shows a perspective view of a battery module according to an embodiment of the present invention, FIG. 3 shows an exploded perspective view of a battery module of FIG. 2, FIG. 4 shows a cross-sectional view with respect to a line IV-IV' of FIG. 2, FIG. 5 shows an enlarged portion in which an inflow portion is formed in FIG. 2, and FIG. 6 shows an enlarged portion VI of FIG. 4.

Referring to FIG. 2 to FIG. 4, the battery module 10 includes: a plurality of battery cell stacking bodies 100 including a plurality of battery cells, a frame member 200 for receiving lower sides and lateral sides of the battery cell stacking bodies 100, front and rear sides of the frame member 200 being opened, a cell barrier structure body 300 disposed between neighboring battery cell stacking bodies 100 from among the battery cell stacking bodies 100, end plates 410 and 420 disposed near front and rear sides of the battery cell stacking body 100 and covering the opened front and rear sides of the frame member 200, and an upper cover 500 for covering an upper side of the battery cell stacking body 100 and combined to the frame member 200. In the drawings to be described hereinafter, front and rear directions may be + and - directions in a y-axis direction, upper and lower directions may be + and - directions in a z-axis direction, and a lateral side direction may be an x-axis direction.

The frame member 200 may be a U-shaped frame for receiving a lower side and a lateral side of the battery cell stacking body 100, front and rear sides thereof being opened. The upper cover 500 may cover the upper side of the battery cell stacking body 100 and may be combined to the frame member 200. However, the configurations of the frame member 200 and the upper cover 500 are not limited thereto, they may have an integrally formed square pipe shape, or the configuration for covering the lower portion of the battery cell stacking body 100 may have a planar shape, and the configuration for covering the upper portion thereof may have a frame in a U shape turned upside down, and they are not specifically restricted.

The battery cell stacking body 100 is formed by stacking a plurality of battery cells. It is preferable for the battery cell to be a pouch-type battery cell. For example, the battery cell may be manufactured by accommodating an electrode assembly in a pouch case of a laminate sheet including a resin layer and an inner layer, and thermally fusing a sealing portion of the pouch case. The battery cell may have a rectangular sheet-type structure. The battery cell may be multiple, and a plurality of battery cells are stacked to be electrically connected to each other to form the battery cell stacking body 100.

The battery cell stacking body 100 is included as a multiple with the cell barrier structure body 300 therebetween in one frame member 200. For example, as shown in the drawing, two battery cell stacking bodies 100 may be disposed with their lateral sides facing each other. In this instance, a plurality of battery cell stacking bodies 100 may have differences according to positions, and may be identically manufactured battery cell stacking bodies. They may be electrically connected to each other in one frame member 200.

The end plates 410 and 420 may be made of a same material as the frame member 200, and may be fixed to the frame member 200 by a method such as a welding bonding. However, without being limited thereto, fixing methods for blocking an interior of the frame member 200 from external conditions may be appropriately applied. The end plates 410 and 420 may be disposed to cover the front side and the rear side of the battery cell stacking body 100, for example, the first end plate 410 may be disposed to cover the front side, and the second end plate 420 may be disposed to cover the rear side. Respective configurational differences will be described in a later portion of the present specification.

Referring to FIG. 2 to FIG. 6, the battery module 10 includes a cell barrier structure body 300 disposed between the neighboring battery cell stacking bodies 100. The cell barrier structure body 300 includes a space in which a first planar member 301 and a second planar member 302 in parallel to the lateral side of the battery cell stacking body 100 are disposed to face each other, and the corresponding space forms a venting passage 320 through which gas and flame generated by thermal runaway pass. The cell barrier structure body 300 may be made of the same substance as the frame member 200, the upper cover 500, and the end plates 410 and 420, and is not specifically limited. Further, to prevent propagation of flame, it may be made of a nonflammable member or may include a nonflammable coating layer.

The respective planar members 301 and 302 of the cell barrier structure body 300 include a first opening 310 opened to face the battery cell stacking body 100 disposed near the planar members 301 and 302. The first opening 310 may be particularly formed near a first end of the cell barrier structure body 300 in a length direction. The first opening 310 is connected to the venting passage 320.

A second end of the cell barrier structure body 300 may be connected to a first outlet 411 formed in the first end plate 410. That is, the venting passage 320 connected to the first opening 310 formed in the planar members 301 and 302 of the cell barrier structure body 300 extends inward along a length direction of the cell barrier structure body 300 to be opened at a second end, and the venting passage 320 is connected to the first outlet 411 formed in the first end plate 410 so that the gas and flame generated at the thermal runaway may be discharged to the outside.

The planar members 301 and 302 of the cell barrier structure body 300 include an inflow portion 330 formed to be opened and closed in the respective first openings 310. That is, when thermal runaway is generated and the gas and flame are generated, the inflow portion 330 is opened so the gas and flame may be discharged to the outside through the first opening 310 and the venting passage 320, and the inflow portion 330 of a portion where the thermal runaway is not generated is not opened but maintains a closed state so it may be blocked from the portion where the thermal runaway is generated. The above-described configuration will now be described in detail.

Referring to FIG. 5 and FIG. 6, the inflow portion 330 includes a blocking plate 331 formed in parallel to the planar members 301 and 302 of the cell barrier structure body 330 and covering the first opening 310, and a plurality of support portions 332 combined to the blocking plate 331. A plurality of support portions 332 may be inserted into a hole formed in the blocking plate 331, and a first end is fixed to insides of the planar members 301 and 302.

The respective support portions 332 include a column portion 332c combined to the blocking plate 331 (i.e., inserted into the hole formed in the blocking plate 331), and a first end of the column portion 332c is fixed to the insides of the planar members 301 and 302, and a raised portion 332b protruding in a direction that is perpendicular to the length direction of the column portion 332c is included at the second end of the column portion 332c, that is, an end portion disposed near the venting passage 320, to prevent the blocking plate 331 from separating. An elastic portion 332a is combined to part of the column portion 332c, and the elastic portion 332a may be a spring combined to the lateral side of the column portion 332c as shown in FIG. 6, and it may be a spring surrounding an external side of the column portion 332c or a spring buried on the inside of the column portion 332c, although not shown. Further, other elastic materials in addition to the spring may be appropriately selected and used.

The elastic portion 332a variably supports a gap between the raised portion 332b and the blocking plate 331. That is, when an external force proceeding to the venting passage 320 is generated, the blocking plate 331 is moved toward the venting passage 320 to reduce the gap between the blocking plate 331 and the raised portion 332b, and when no external force is applied, the blocking plate 331 is supported to be closely attached to the planar members 301 and 302 to separate respective spaces with the cell barrier structure body 300 therebetween from each other. Hence, when thermal runaway is generated on one side with the cell barrier structure body 300 therebetween, the inflow portion 330 on the side of the battery cell stacking body 100 to which the thermal runaway is generated is opened to discharge the gas and flame to the outside, and the inflow portion 330 of a portion where no thermal runaway is generated is not opened but maintains a closed state, which will be described in a later portion of the present specification.

An external venting passage 211 will now be described with reference to FIG. 4.

Referring to FIG. 4, the external venting passage 211 may be formed along the lateral side of the frame member 200. The external venting passage 211 may have a pipe shape including a second opening 213 opened toward the facing battery cell stacking body 100 in a like way of the venting passage 320 of the cell barrier structure body 300. The second opening 213 may be formed near a rear side of the battery cell stacking body 100 (i.e., the first end of the cell barrier structure body 300), and an end portion on an opposite side in the length direction, that is, the end portion disposed near a front side of the battery cell stacking body 100 may form a second outlet 212 communicating with the outside. Further, the second opening 213 may be connected to the first opening 310 through a space between the second end plate 420 and the battery cell stacking body 100. According to the above-noted configuration, the flame and gas generated therein may be moved quickly and may be discharged to the outside.

The external venting passage 211 may be integrally formed with the frame member 200, and may be attached as a pipe-shaped structure body in addition to the frame member 200. By including the external venting passage 211, the gas and flame may be discharged through the cell barrier structure body 300 and the external venting passage 211 when thermal runaway is generated so the gas and flame may be discharged to the outside more quickly.

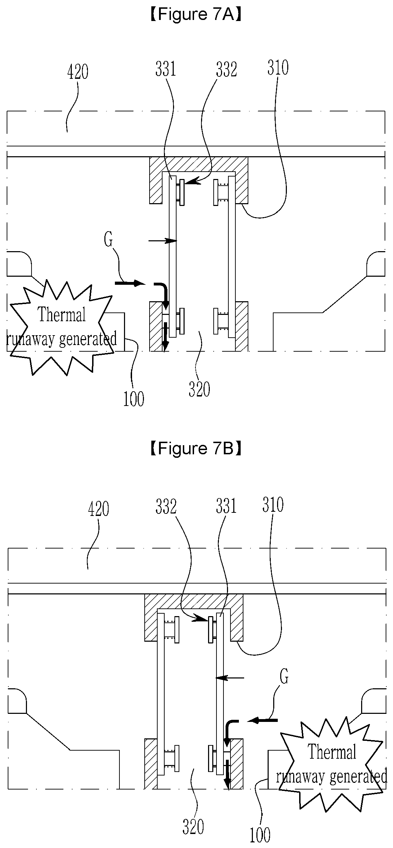

A process for discharging gas and flame when thermal runaway is generated in a battery module will now be described with reference to FIG. 7A and FIG. 7B.

FIG. 7A and FIG. 7B show discharging of gas when thermal runaway is generated in a battery module of FIG. 2.

Regarding a plurality of battery cell stacking bodies 100, a cell barrier structure body 300 having a venting passage 320 is disposed between adjacent battery cell stacking bodies 100, and an external venting passage 211 formed on a side wall of the frame member 200 is disposed on an outermost side so the battery cell stacking bodies 100 respectively face the first and second openings 310 and 213. Hence, the flame and gas generated by the battery cell stacking body 100 at the generation time of thermal runaway may move to the venting passage 320 and the external venting passage 211 through the openings 310 and 213 and may be discharged to the outside. When thermal runaway is generated, the opening 310 on the side where the thermal runaway is not generated with reference to the cell barrier structure body 300 is blocked by the inflow portion 330 so it may be isolated from the thermal runaway stacking body.

For example, as shown in FIG. 7A, when thermal runaway is generated by the battery cell stacking body 100 positioned on a left of the drawing, an external force is applied to the blocking plate 331 of the inflow portion 330 in an arrow direction, that is, to a side (right side) of the venting passage 320, by the gas and flame G generated by the battery cell stacking body 100. By this, the elastic portion 332a of the support portion 332 is compressed and the inflow portion 330 is opened. The gas and flame G may be input to the venting passage 320 through the opened portion, may move along the venting passage 320, and may be discharged to the outside. In this instance, as the inflow portion 330 facing the battery cell stacking body 100 positioned on the right is not opened but is closed, the flame and gas may not be transmitted to the battery cell stacking body 100 positioned on the right side of the drawing but may be quickly discharged to the outside, and the adjacent battery cell stacking body 100 may be prevented from being damaged.

As shown in FIG. 7B, when thermal runaway is generated in the battery cell stacking body 100 positioned on the right side of the drawing, an external force is applied to the blocking plate 331 of the inflow portion 330 in the arrow direction, that is, to the venting passage 320 (left side), by the gas and flame G generated by the battery cell stacking body 100. By this, the elastic portion 332a of the support portion 332 is compressed and the inflow portion 330 is opened. The gas and flame G are input to the venting passage 320 through the opened portion, may move along the venting passage 320, and may be discharged to the outside. In this instance, as the inflow portion 330 facing the battery cell stacking body 100 positioned on the left is not opened but is closed, the flame and gas may not be transmitted to the battery cell stacking body 100 positioned on the left in the drawing but may be quickly discharged to the outside, and hence, the battery cell stacking body 100 may be prevented from being damaged.

As described, according to the present embodiment, when the thermal runaway is generated by part of the battery cell stacking body 100 in the battery module 10, the generated flame and gas may move along the venting passage 320 formed in the cell barrier structure body 300 through the opened inflow portion 330 and may be quickly discharged to the outside, and in this instance, the inflow portion 330 on the opposite side maintains a closed state, thereby suppressing heat energy from being stored in the battery module 10, and blocking the flame and gas from transitioning to the other neighboring battery cell stacking body 100 and the battery module.

The above-described one or more battery modules according to the present embodiment may be installed together with various control and protection systems such as the BMS (Battery Management System) or the cooling system, and may form the battery pack. Particularly, when the battery module according to an embodiment of the present invention is disposed in the battery pack including battery modules, the flame and gas may be quickly discharged to the outside to thus prevent damage from being transmitted to the adjacent battery module outside the battery module or other parts of the battery pack. Further, when the battery module is disposed, the outlet for discharging the gas and flame may be disposed (e.g., the rear side of the vehicle) near the place where the parts that may be damaged are not disposed outside the battery pack, thereby minimizing the influence according to the thermal runaway.

The battery module or the battery pack is applicable to various types of devices. In detail, these devices may be applied to a transportation apparatus such as an electric bicycle, an electric vehicle, a hybrid vehicle, and the like, but are not limited thereto, and may be applied to various devices that can use the secondary battery.

In the present embodiment, terms representing directions such as before, after, right, left, top, and bottom have been used, but they are for ease of description, and are variable depending on a position of a target material or a position of an observer.

### < Description of symbols >

10: battery module
100: battery cell stacking body
200: frame member
300: cell barrier structure body
310: first opening
320: venting passage
330: inflow portion
331: blocking plate
332: support portion
332a: elastic portion
332b: raised portion
332c: column portion
301: first planar member
302: second planar member
410: first end plate
420: second end plate
411: first outlet
212: second outlet

## Claims

1. A battery module (10) comprising:
a plurality of battery cell stacking bodies, each battery cell stacking body (100) including a plurality of battery cells;
a frame member (200) for receiving the plurality of battery cell stacking bodies; and
at least one cell barrier structure body (300) disposed between adjacent battery cell stacking bodies of the plurality of battery cell stacking bodies,
wherein the at least one cell barrier structure body (300) includes two planar members (301, 302), and a venting passage (320) formed by the two planar members (301, 302), and
wherein each of the planar members (301, 302) includes an inflow portion (330) that is formed to be opened and closed,
**characterized in that** the inflow portion (330) includes:
a first opening (310) formed by an opening in a respective planar member (301, 302);
a blocking plate (331) for covering the first opening (310); and
a plurality of support portions (332) attached to the blocking plate (331),
wherein each of the plurality of support portions (332) includes:
a column portion (332c) having a first end attached to the blocking plate (331), wherein the first end of the column portion (332c) is fixed to the insides of the planar members (301, 302);
a raised portion (332b) at a second end of the column portion (332c); and
an elastic portion (332a) around the column portion (332c) and variably supporting a gap between the raised portion (332b) and the blocking plate (331), wherein the elastic portion (332a) is a spring; and
wherein the blocking plate (331) is configured to move toward the raised portion (332b) by pressure of a gas input through the first opening (310) to open the inflow portion (330).

2. The battery module (10) of claim 1, wherein the at least one cell barrier structure body (300) includes a first end and a second end spaced from the first end in a length direction, and
wherein the first opening (310) is formed near the first end, and the second end is connected to a first outlet (411) communicating with an outside of the battery module (10).

3. The battery module (10) of claim 2, further comprising a first end plate (410) and a second end plate (420) for covering respective end portions of the plurality of battery cell stacking bodies in the length direction,
wherein the first end plate (410) includes the first outlet (411).

4. The battery module (10) of claim 3, further comprising at least one external venting passage (211) disposed at a side of one of the plurality of battery cell stacking bodies opposite the at least one cell barrier structure body (300).

5. The battery module (10) of claim 4, wherein the at least one external venting passage (211) includes a first end and a second end spaced from the first end in the length direction, and includes a second opening (213) disposed near the first end and opened toward the plurality of battery cell stacking bodies.

6. The battery module (10) of claim 5, wherein the second end of the external venting passage (211) is connected to a second outlet (212) communicating with the outside of the battery module (10).

7. The battery module (10) of claim 4, wherein the second end plate (420) does not include an outlet, and
wherein the first opening (310) of the venting passage (320) is connected to the external venting passage (211) by a space between an end portion of the plurality of battery cell stacking bodies and the second end plate (420).

8. A battery pack comprising a battery module (10) of claim 1.

## Patentansprüche

1. Batteriemodul (10), umfassend:
eine Vielzahl von Batteriezellen-Stapelkörpern, wobei jeder Batteriezellen-Stapelkörper (100) eine Vielzahl von Batteriezellen umfasst;
ein Rahmenelement (200) zum Aufnehmen der mehreren Batteriezellen-Stapelkörper; und
wenigstens einen Zellbarrierestrukturkörper (300), der zwischen benachbarten Batteriezellen-Stapelkörpern der Vielzahl von Batteriezellen-Stapelkörpern angeordnet ist,
wobei der wenigstens eine Zellbarrierestrukturkörper (300) zwei flache Elemente (301, 302) und einen durch die beiden flachen Elemente (301, 302) gebildeten Entlüftungskanal (320) umfasst, und
wobei jedes der flachen Elemente (301, 302) einen Einlassabschnitt (330) umfasst, der geöffnet und geschlossen werden kann,
**dadurch gekennzeichnet, dass** der Einlassabschnitt (330) umfasst:
eine erste Öffnung (310), die durch eine Öffnung in einem jeweiligen flachen Element (301, 302) gebildet ist;
eine Sperrplatte (331) zum Abdecken der ersten Öffnung (310); und
eine Vielzahl von Stützabschnitten (332), die an der Sperrplatte (331) angebracht sind,
wobei jeder der mehreren Stützabschnitte (332) umfasst:
einen Säulenabschnitt (332c), dessen erstes Ende an der Sperrplatte (331) angebracht ist, wobei das erste Ende des Säulenabschnitts (332c) an den Innenseiten der flachen Elemente (301, 302) befestigt ist;
einen erhabenen Abschnitt (332b) an einem zweiten Ende des Säulenabschnitts (332c); und
einen elastischen Abschnitt (332a) um den Säulenabschnitt (332c) herum, der einen Abstand zwischen dem erhabenen Abschnitt (332b) und der Sperrplatte (331) variabel stütz, wobei der elastische Abschnitt (332a) eine Feder ist; und
wobei die Sperrplatte (331) so ausgebildet ist, dass sie sich durch den Druck eines durch die erste Öffnung (310) eingeleiteten Gases in Richtung des erhabenen Abschnitts (332b) bewegt, um den Einlassabschnitt (330) zu öffnen.

2. Batteriemodul (10) nach Anspruch 1, wobei der wenigstens eine Zellbarrierestrukturkörper (300) ein erstes Ende und ein zweites Ende aufweist, das in Längsrichtung vom ersten Ende beabstandet ist, und
wobei die erste Öffnung (310) in der Nähe des ersten Endes ausgebildet ist und das zweite Ende mit einem ersten Auslass (411) verbunden ist, der mit einer Außenseite des Batteriemoduls (10) in Verbindung steht.

3. Batteriemodul (10) nach Anspruch 2, das ferner eine erste Endplatte (410) und eine zweite Endplatte (420) umfasst, um jeweilige Endabschnitte der mehreren Batteriezellen-Stapelkörper in Längsrichtung abzudecken,
wobei die erste Endplatte (410) den ersten Auslass (411) umfasst.

4. Batteriemodul (10) nach Anspruch 3, das ferner wenigstens einen externen Entlüftungskanal (211) umfasst, der an einer Seite eines der mehreren Batteriezellen-Stapelkörper gegenüber dem wenigstens einen Zellbarrierestrukturkörper (300) angeordnet ist.

5. Batteriemodul (10) nach Anspruch 4, wobei der wenigstens eine externe Entlüftungskanal (211) ein erstes Ende und ein vom ersten Ende beabstandetes zweites Ende aufweist, und eine zweite Öffnung (213) aufweist, die nahe dem ersten Ende angeordnet ist und zu den mehreren Batteriezellen-Stapelkörpern hin offen ist.

6. Batteriemodul (10) nach Anspruch 5, wobei das zweite Ende des externen Entlüftungskanals (211) mit einem zweiten Auslass (212) verbunden ist, der mit der Außenseite des Batteriemoduls (10) in Verbindung steht.

7. Batteriemodul (10) nach Anspruch 4, wobei die zweite Endplatte (420) keinen Auslass aufweist, und
wobei die erste Öffnung (310) des Entlüftungskanals (320) über einen Zwischenraum zwischen einem Endabschnitt der mehreren Batteriezellen-Stapelkörper und der zweiten Endplatte (420) mit dem externen Entlüftungskanal (211) verbunden ist.

8. Batteriepack, das ein Batteriemodul (10) nach Anspruch 1 umfasst.

## Revendications

1. Module de batterie (10) comprenant :
une pluralité de corps d'empilement de cellules de batterie, chaque corps d'empilement de cellules de batterie (100) comprenant une pluralité de cellules de batterie ;
un élément de châssis (200) pour recevoir la pluralité de corps d'empilement de cellules de batterie ; et
au moins un corps de structure barrière de cellule (300) disposé entre des corps d'empilement de cellules de batterie adjacents de la pluralité de corps d'empilement de cellules de batterie,
l'au moins un corps de structure barrière de cellule (300) comprenant deux éléments plans (301, 302) et un conduit d'évacuation (320) formé par les deux éléments plans (301, 302), et
chacun des éléments plans (301, 302) comprenant une partie d'entrée (330) formée pour être ouverte et fermée,
**caractérisé en ce que** la partie d'entrée (330) comprend :
une première ouverture (310) formée par une ouverture dans un élément plan (301, 302) respectif ;
une plaque de blocage (331) pour couvrir la première ouverture (310) ; et
une pluralité de parties de support (332) fixées sur la plaque de blocage (331),
chacune de la pluralité de parties de support (332) comprenant :
une partie de colonne (332c) dont un premier bout est fixé sur la plaque de blocage (331), le premier bout de la partie de colonne (332c) étant fixé sur les parties intérieures des éléments plans (301, 302),
une partie surélevée (332b) à un deuxième bout de la partie de colonne (332c) ; et
une partie élastique (332a) autour de la partie de colonne (332c) supportant variablement un écart entre la partie surélevée (332b) et la plaque de blocage (331), la partie élastique (332a) étant un ressort ; et
la plaque de blocage (331) étant configurée pour se déplacer vers la partie surélevée (332b) sous la pression d'une entrée de gaz à travers la première ouverture (310) pour ouvrir la partie d'entrée (330).

2. Module de batterie (10) selon la revendication 1, au moins un corps de structure barrière de cellule (300) comprenant un premier bout, et un deuxième bout espacé du premier bout dans le sens de la longueur, et
la première ouverture (310) étant formée à proximité du premier bout, et le deuxième bout étant connecté à une première sortie (411) communiquant avec un extérieur du module de batterie (10).

3. Module de batterie (10) selon la revendication 2, comprenant en outre une première flasque (410) et une deuxième flasque (420) pour couvrir des parties terminales respectives de la pluralité de corps d'empilement de cellules de batterie dans le sens de la longueur,
la première flasque (410) comprenant la première sortie (411).

4. Module de batterie (10) selon la revendication 3, comprenant en outre au moins un conduit d'évacuation externe (211) disposé sur un côté d'un de la pluralité de corps d'empilement de cellules de batterie situé face à l'au moins un corps de structure barrière de cellule (300).

5. Module de batterie (10) selon la revendication 4, l'au moins un conduit d'évacuation externe (211) comprenant un premier bout et un deuxième bout espacé du premier bout dans le sens de la longueur, et comprenant une deuxième ouverture (213) disposée à proximité du premier bout et ouverte vers la pluralité de corps d'empilement de cellules de batterie.

6. Module de batterie (10) selon la revendication 5, le deuxième bout du conduit d'évacuation externe (211) étant connecté à une deuxième sortie (212) communiquant avec l'extérieur du module de batterie (10).

7. Module de batterie (10) selon la revendication 4, la deuxième flasque (420) ne possédant pas de sortie, et
la première ouverture (310) du conduit d'évacuation (320) étant connectée au conduit d'évacuation externe (211) par un espace entre une partie terminale de la pluralité de corps d'empilement de cellules de batterie et de la deuxième flasque (420).

8. Bloc-batterie comprenant un module de batterie (10) selon la revendication 1.
